# EUROPÄISCHE PATENTANMELDUNG

(11) **EP 1 044 981 A1**
(43) Veröffentlichungstag der Anmeldung: **18.10.2000**
(21) Anmeldenummer: 00107137.2
(22) Anmeldetag: 10.04.2000
(51) Int. Cl.: C07F 9/02

(54) **Stabilisierte Phosphorverbindungen beinhaltende Zusammensetzung**

(30) Priorität: 15.04.1999 DE 19917070
(71) Anmelder: BASF AKTIENGESELLSCHAFT, 67056 Ludwigshafen (DE)
(72) Erfinder: Klatt, Martin, Dr., 68165 Mannheim (DE); Hackl, Christa, 49142 Bad Essen (DE); Scholz, Günter, Dr., 49448 Lemförde (DE)
(74) Vertreter: Isenbruck, Günter, Dr.

(57) **Zusammenfassung**

Die Erfindung betrifft eine Zusammensetzung, mindestens enthaltend
- eine Phosphorverbindung,
   und
- eine Stabilisatorverbindung gemäß einer der allgemeinen Formeln I bis IV,
sowie die Verwendung dieser Zusammensetzung zur Erhöhung der Lagerstabilität bzw. Verringerung der Metallkorrosion.

## Beschreibung

Die Erfindung betrifft eine stabilisierte Phosphorverbindungen beinhaltende Zusammensetzung sowie die Verwendung dieser Zusammensetzung zur Erhöhung der Lagerstabilität bzw. Verringerung der Metallkorrosion.

Für gewöhnlich besteht bei der Verwendung von Phosphorverbindungen das Problem, daß diese zum einen nur eine geringfügige Lagerstabilität besitzen und zum anderen so aggressiv sind, daß sie Metalle korrodieren. Die geringe Lagerstabilität und die hohe Metallkorrosionsneigung der vorzugsweise organischen Phosphorverbindungen führt dazu, daß diese insbesondere dann, wenn sie großtechnisch gehandhabt werden, schlecht über weite Strecken transportierbar sind. Weiterhin ist es mit einem erheblichen technischen Aufwand verbunden, Phosphorverbindungen über einen längeren Zeitraum zu bevorraten. Für den wirtschaftlich sinnvollen Einsatz von organischen Phosphorverbindungen in der Großtechnik ist es jedoch in der Regel notwendig, diese in Gebinden von wirtschaftlich sinnvoller Größe, beispielsweise in Kesselwagen, zu transportieren. Weiterhin werden Phosphorverbindungen meist in kontinuierlichen Verfahren mit anderen Materialien zu neuen Produkten verarbeitet, wobei die Phosphorverbindungen über einen langen Zeitraum zugeführt und daher entsprechend bevorratet werden müssen.

Aus dem Voranstehenden ergibt sich nunmehr als erfindungsgemäße Aufgabe, Phosphorverbindungen beinhaltende Zusammensetzungen zur Verfügung zu stellen, die sowohl eine hohe Lagerstabilität als auch eine geringe Metallkorrosionsneigung aufweisen.

Diese Aufgabe wird erfindungsgemäß gelöst durch eine Zusammensetzung, mindestens enthaltend eine Phosphorverbindung, und mindestens eine Stabilisatorverbindung gemäß einer der allgemeinen Formeln I bis IV: 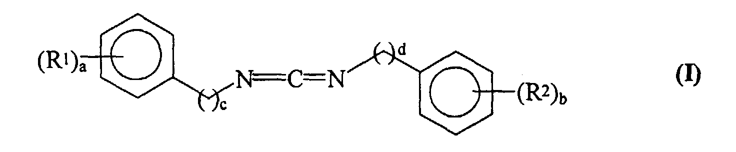 mit
R¹, R² unabhängig voneinander ein Wasserstoffatom, C₁- bis C₁₀-Alkylrest, C₆- bis C₁₂-Arylrest, C₇- bis C₁₃-Aralkylrest oder C₇- bis C₁₃-Alkylarylrest,
a, b unabhängig voneinander 1 bis 5,
c, d unabhängig voneinander 0 bis 10; 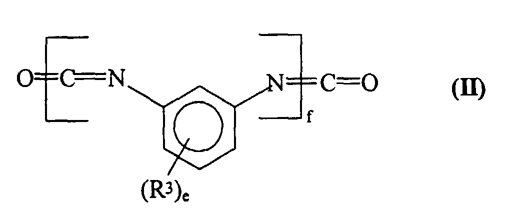 mit
R³ ein Wasserstoffatom, C₁- bis C₁₀-Alkylrest, C₆- bis C₁₂-Arylrest, C₇- bis C₁₃-Aralkylrest oder C₇- bis C₁₃-Alkylarylrest,
e 1 bis 4,
f 1 bis 100; 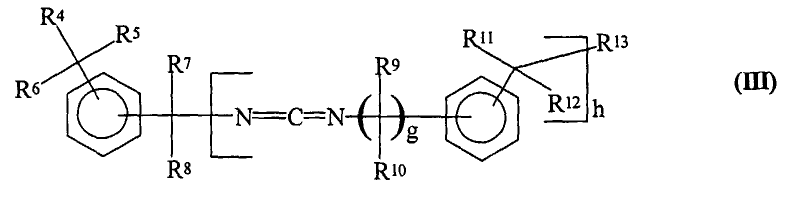 mit
R⁴, R¹³ unabhängig voneinander NCO oder NHCOOR', wobei R' ein Alkylpolyetherglycol oder C₁- bis C₂₀-Alkohol ist,
R⁵, R⁶, R⁷, R⁸, R⁹, R¹⁰, R¹¹, R¹² unabhängig voneinander ein Wasserstoffatom, C₁- bis C₁₀-Alkylrest, C₆- bis C₁₂-Arylrest, C₇- bis C₁₃-Aralkylrest oder C₇- bis C₁₃-Alkylarylrest,
g 0 bis 5,
h 1 bis 100; 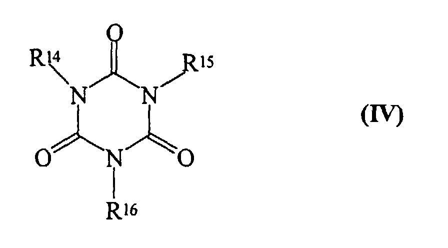 mit
R¹⁴, R¹⁵, R¹⁶, unabhängig voneinander ein Wasserstoffatom oder 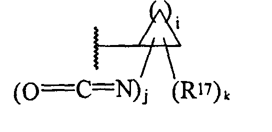 wobei R₁₇ ein Wasserstoffatom, C₁- bis C₁₀-Alkylrest, C₆- bis C₁₂-Arytrest, C₇- bis C₁₃-Aralkylrest,C₇- bis C₁₃-Alkylarylrest ist,
i 2 bis 8,
j 1 bis i-k
k 0 bis j,wobei j + k ≤ i
" 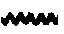 " kennzeichnet die C-N-Bindung zum Stickstoffheterocyclus gemäß der allgemeinen Formel IV. oder
(CH₂)₁-N=C=O, wobei 11 bis 20 ist.

Erfindungsgemäß steht R¹ und R² jeweils unabhängig voneinander bevorzugt für einen C₁- bis C₁₀-Alkylrest, besonders bevorzugt für einen C₁- bis C₄-Alkylrest und darüber hinaus bevorzugt für einen C₃-Alkylrest. Von diesen ist ein 2-Propyl-Rest besonders bevorzugt,

Die ganzzahligen Variablen a und b bedeuten jeweils unabhängig voneinander bevorzugt 1, 2, 3 oder 4 und besonders bevorzugt 2. Für den Fall, daß a und b jeweils 2 bedeuten, befinden sich die entsprechenden Reste R¹ und R² jeweils an den Kohlenstoffen in Nachbarstellung zu dem Kohlenstoff, an den sich die NCN-Gruppe am Benzolring anschließt.

Neben den C₆- bis C₁₂-Arylresten sind erfindungsgemäß C₆- bis C₁₀-Arylrestebevorzugt und C₆- bis C₈-Arylreste besonders bevorzugt. Von den vorgenannten Arylresten sind insbesondere Phenyl- und Naphtylreste besonders bevorzugt. Bevorzugte Aralkylreste mit vorzugsweise 7 bis 14 Kohlenstoffatomen sind Toluyl, Xylyl, tert.-Butylphenyl und Di-tert.-butylphenyl. Als Alkylarylrest ist ein solcher mit 7 bis 14 Kohlenstoffatomen bevorzugt, und ist Benzyl besonders bevorzugt.

Erfindungsgemäß bedeuten die Variablen c und d unabhängig voneinander vorzugsweise 0, 1, 2, 3, 4 oder 5 und besonders bevorzugt 0, 1 oder 2. Darüber hinaus bevorzugt ist es, wenn c und d jeweils 0 sind.

Für die erfindungsgemäß bevorzugte Bedeutung von Rest R³ gelten die Ausführungen zu den Resten R¹ und R².

Bevorzugt bedeutet die ganzzahlige Variable e 1, 2 oder 3 und besonders bevorzugt 3. Für den Fall, daß die Variable e 3 bedeutet, ist es bevorzugt, daß die Reste R³ jeweils an die Kohlenstoffatome des Benzolrings gebunden sind, die in Nachbarstellung zu denen stehen, an denen ein Stickstoff gebunden ist.

Die ganzzahlige Variable f hat vorzugsweise die Werte im Bereich von 1 bis 50 und besonders bevorzugt im Bereich von 1 bis 20.

R' ist vorzugsweise von einem C₁- bis C₁₀-Alkohol und besonders bevorzugt von einem C₂- bis C₅-Alkohol abgeleitet. Unter diesen Alkoholen sind wiederum Ethanol, n-Propanol, Isopropanol, n-Butanol, Isobutanol, tert.-Butanol, n-Pentanol und Isopentanol bevorzugt, wobei Ethanol besonders bevorzugt ist.

Wenn R' ein Alkylpolyetherglycol ist, sind C₁- bis C₁₀-Alkylpolyetherglycole bevorzugt und sind C₁- bis C₅-Alkylpolyetherglycole besonders bevorzugt. Hierunter sind wiederum Methyl-, Ethyl-, Propyl-, Isopropylpolyetherglycole bevorzugt und sind Methylpolyetherglycole besonders bevorzugt. Die Alkylpolyetherglycole weisen vorzugsweise ein Molekulargewicht im Bereich von 1000 bis 1000000, vorzugsweise von 1500 bis 100000 und besonders bevorzugt von 2000 bis 10000 g/Mol auf.

Für die bevorzugten Bedeutungen von R⁵, R⁶, R⁷, R⁸, R⁹, R¹⁰, R¹¹ und R¹² gelten die zu R¹ und R² gemachten Ausführungen mit dem Unterschied, daß anstelle des 2-Propylrestes ein Methylrest besonders bevorzugt ist.

Die ganzzahlige Variable g besitzt vorzugsweise die Werte 0, 1, 2, 3 und besonders bevorzugt 0. Die Variable h besitzt bevorzugt die Werte 1, 2, 3, 4, 5, 6, 7, 8, 9 oder 10 und besonders bevorzugt die Werte 2, 3, 4, 5, 6.

Bei den Resten R¹⁴, R¹⁵ und R¹⁶ ist es bevorzugt, daß diese kein Wasserstoffatom sind.

Für R¹⁷ gilt das zu R⁵ bis R¹² Ausgeführte gleichfalls. Die ganzzahlige Variable i ist bevorzugt 3, 4 oder 5 und besonders bevorzugt 5, so daß sich mit dem Kohlenstoff, über den der zyklische Rest an den Stickstoff des Heterocyclus gebunden ist, ein Cyclohexylring bildet. Weiterhin ist es bevorzugt, daß die Variable i 1 beträgt.

Für den Fall, daß ein Cyclohexylring gebildet wird, beträgt die ganzzahlige Variable k vorzugsweise 4. In dem Fall ist es wiederum bevorzugt, daß jeweils 2 von 4 Resten R¹⁷ an einen Kohlenstoff des Cyclohexylrings gebunden sind und zu dem weiteren, gleichfalls 2 Reste R¹⁷ tragenden Kohlenstoff, durch einen dazwischenliegenden Kohlenstoff beabstandet sind.

Eine bevorzugte Ausführungsform der erfindungsgemäßen Zusammensetzung enthält 0,01 bis 20 Gew.-%, bevorzugt 0,01 bis 5 Gew.-%, insbesondere 0,05 bis 2 Gew.-%, bezogen auf die Zusammensetzung, mindestens einer Stabilisatorverbindung.

Gemäß einer anderen bevorzugten Ausführungsform enthält die erfindungsgemäße Zusammensetzung 99,99 bis 80 Gew. -%, bezogen auf die Zusammensetzung, mindestens einer Phosphorverbindung.

Erfindungsgemäß bevorzugte Phosphorverbindungen weisen 6 bis 120, bevorzugt 6 bis 80 und besonders bevorzugt 8 bis 40 Kohlenstoffatome auf.

Für die erfindungsgemäße Zusammensetzung kommen alle dem Fachmann bekannten Phosphorverbindungen in Betracht. Hierunter sind insbesondere die organischen Phosphorverbindungen bevorzugt, die großtechnisch eingesetzt werden oder bei denen eine geringe Lagerstabilität oder eine hohe Korrosionsneigung oder beides besteht. Unter diesen organischen Phosphorverbindungen sind die mit der allgemeinen Formel (V) besonders bevorzugt. 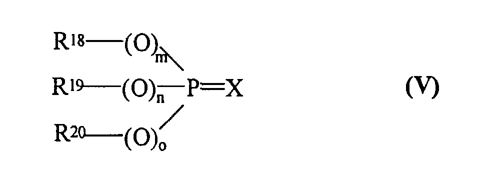 mit
- R¹⁸, R¹⁹ und R²⁰: unabhängig voneinander ein Alkylrest, Arylrest, Alkylarylrest, Arylalkylrest oder Cycloalkylrest mit 7 bis 40 Kohlenstoffatomen oder Cycloalkylrest mit 5 bis 40;
- X: ein Schwefel- oder Sauerstoffatom, bevorzugt ein Sauerstoffatom;
- m, n, o: unabhängig voneinander 0 oder 1, bevorzugt 0.

In einer Ausführungsform der Phosphorverbindung mit der allgemeinen Formel V ist es bevorzugt, daß zwei der Variablen m, n und o 0 und 1 bedeuten.

Beispiele für Phosphinoxide als Phosphorverbindungen sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Bevorzugt sind weiterhin oxidierte Umsetzungsprodukte aus Phosphin mit Aldehyden, insbesondere aus t-Butylphosphin mit Glyoxal. Besonders bevorzugt eingesetzt werden Triphenylphosphinoxid, Tricyclohexylphosphinoxid und Tris-(n-octyl)-phosphinoxid.

Ebenso geeignet als Phosphorverbindung ist Triphenylphosphinsulfid und dessen wie oben beschriebene Derivate der Phosphinoxide und Triphenylphosphat.

Phosphorverbindungen der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Beispiele sind organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Di-p-tolylphosphinsäure, Di-kresylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl (Alkyl)phosphinsäureamide, wie z.B. Diphenylphosphinsäuredimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten wie in allgemeiner Formel VI 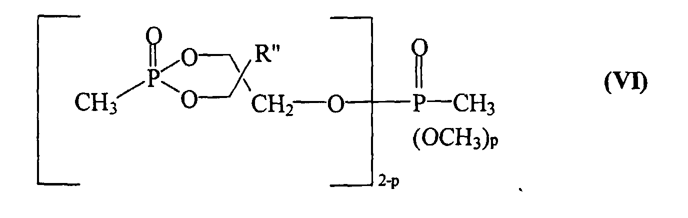 wobei R'' einen C₁- bis C₄-Alkylrest, bevorzugt Methytrest bedeutet und p = 0 oder 1 bedeutet (Amgardâ P45 der Firma Albright & Wilson).

Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert-butylphenyl)-phosphit, Trisnonylphenylphosphit (beispielsweise Irgaphos**®** TNPP der Ciba Geigy AG) oder Phenyldidecylphosphit u.a. enthalten. Es kommen aber auch Diphosphite, wie z.B. Propylenglykol- 1,2-bis(diphosphit) oder cyclische Phosphite, die sich vom Pentaerythrit, Neopentylglykol oder Brenzkatechin ableiten, in Frage.

Besonders bevorzugt werden als Phosphorverbindungen der Oxidationsstufe +3 Methylneopentylglycolphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenyl-phosphat, Di(nonyt)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxy-Rest ist. Ganz besonders geeignet ist Triphenylphosphat und Resorcinol-bis-(diphenylphosphat) (RDP) und dessen kernsubstituierten Derivate der allgemeinen Formel VII 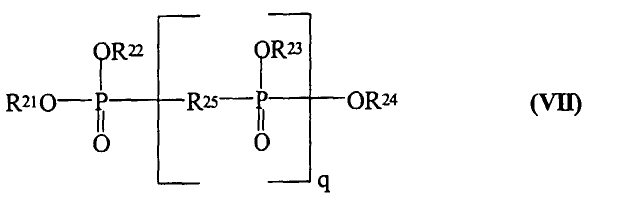 mit
- R²¹ bis R²⁴: ein aromatischer Rest mit 6 bis 20 C-Atomen, bevorzugt ein Phenylrest, welcher mit Alkylgruppen mit 1 bis 4 C-Atomen, bevorzugt Methyl, substituiert sein kann,
- R²⁵: ein zweiwertiger Phenotrest, bevorzugt 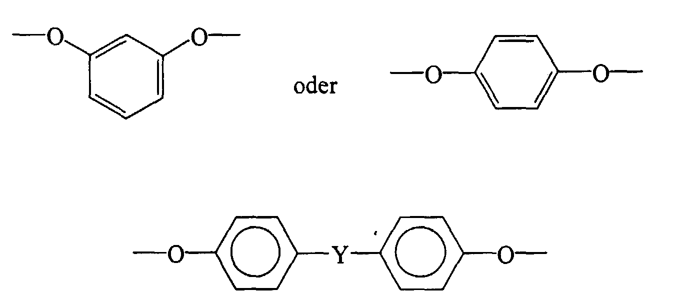 mit Y -CH₂-, C=O, S, SO₂, -C(CH₃)₂-, vorzugsweise - C(CH₃)₂-
und q ein Durchschnittswert zwischen 0,1 und 100, bevorzugt 0,5 bis 50, insbesondere 0,8 bis 10 und ganz besonders 1 bis 5.

Besonders bevorzugt ist die Phosphorverbindung der allgemeinen Formel VIII 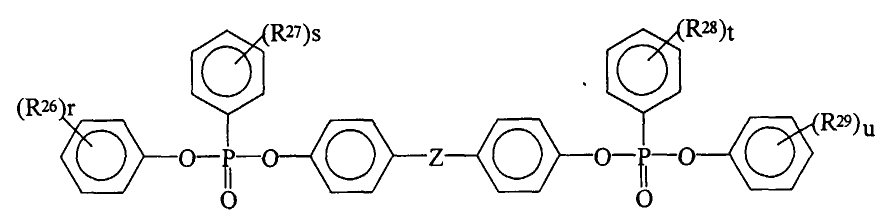 mit
- R²⁶, R²⁷, R²⁸, R²⁹,: unabhängig voneinander Wasserstoffatom oder C₁- bis C₆-Alkylrest,
- Z: wie der zuvor definierte Rest Y
- r, s, t, u: unabhängig voneinander 1, 2, 3, 4 oder 5, wobei 1 und die paraStellung des entsprechenden Restes zum Phosphor bevorzugt ist.

Die im Handel erhältlichen RDP-Produkte unter den Marken FyroflexR-RDP (Akzo Nobel) sowie CR 733-S (Daihachi) sind bedingt durch das Hersteilverfahren Gemische aus ca. 85 % RDP mit ca. 2,5 % Triphenylphosphat sowie ca. 12,5 % oligomeren Anteilen, in denen der Oligomerisierungsgrad meist < 10 ist.

Des weiteren können auch cyclische Phosphate als Phosphorverbindungen eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, vorzugsweise halogenfreien organischen Phosphorverbindungen mit Phosphor in der Polymerkette entstehen beispielsweise bei der Herstellung von pentacyclischen, ungesättigten Phosphindihalogeniden, wie es bei-spielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7.000, vorzugsweise im Bereich von 700 bis 2.000 liegen. Der Phosphor besitzt hierbei die Oxidationsstufe -1.

Ferner können anorganische Koordinationspolymere von Aryl(Alkyl)-phosphinsäuren wie z.B. Poly-b-natrium(I)-methylphenylphosphinat als Phosphorverbindungen eingesetzt werden. Ihre Herstellung wird in DE-A 31 40 520 angegeben. Der Phosphor besitzt die Oxidationszahl +1.

Weiterhin können solche, vorzugsweise halogenfreien, polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethyl-hydrochinon, Bisphenol-A, Tetramethylbisphenol-A entstehen.

Weitere, vorzugsweise halogenfreie, polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblazeâ 19 (eingetragene Marke der Firma Mobil Oil) als Phosphorverbindungen verwendet werden.

Weiterhin ist eine erfindungsgemäße Zusammensetzung bevorzugt, die über einen Zeitraum von 1 bis 100, bevorzugt 2 bis 50 und besonders bevorzugt 10 bis 30 Tagen ab dem Zeitpunkt des In-Kontakt-Bringens der Phosphorverbindung mit der Stabilisatorverbindung um maximal 20, bevorzugt maximal 15 und besonders bevorzugt maximal 5 % von der Säurezahl im Zeitpunkt des in In-Kontakt-Bringens abweicht.

Die Phosphorverbindung und die Stabilisatorverbindung sowie gegebenenfalls andere, üblicherweise zuzusetzende Hilfs- und Zusatzstoffe, können nach allen dem Fachmann allgemein bekannten Verfahren miteinander in Kontakt gebracht werden. Jedoch hat sich das Mischen in Tanks mit bewegten Mischern oder das Mischen der beispielsweise durch ein Fallrohr bewegten Zusammensetzung über einen statischen Mischer bewährt.

Die erfindungsgemäße Zusammensetzung oder die Stabilisatorverbindung oder mindestens zwei davon werden bevorzugt zur Erhöhung der Lagerstabilität oder zur Verringerung der Metallkorrosionsneigung von Phosphorverbindungen verwendet.

Erfindungsgemäß wird die Lagerstabilität über die Abweichung der Säurezahl über die Lagerdauer der entsprechenden Zusammensetzung bestimmt.

Als Lagerstabilität ist bevorzugt, daß die Säurezahl über einen Zeitraum von 5 Tagen, bevorzugt 2 Wochen und besonders bevorzugt einem Monat um maximal 10, bevorzugt maximal 5 und besonders bevorzugt maximal 1 % von der Säurezahl zu Beginn des vorgenannten Zeitraums abweicht.

Die Stärke der Metallkorrosionsneigung ergibt sich aus dem Vergleich der vor Korrosion einer entsprechenden Verbindung mit oder ohne Stabilisatorverbindung bei ansonsten gleichen Bedingungen über einen gleichen Zeitraum.

Als handelsübliche Stabilisatorverbindungen haben sich Vestanat® 1890/100 der Hüls AG, Basonat® H/100 der BASF AG, Stabaxol® 1 der Rhein-Chemie GmbH, Stabaxol® p der Rhein Chemie GmbH und Elastostab® der Elastogran GmbH besonders bewährt.

Erfindungsgemäß besonders bevorzugte Stabilisatorverbindungen beinhalten mindestens eine der folgenden anhand ihrer Strukturformeln dargestellten Verbindungen: 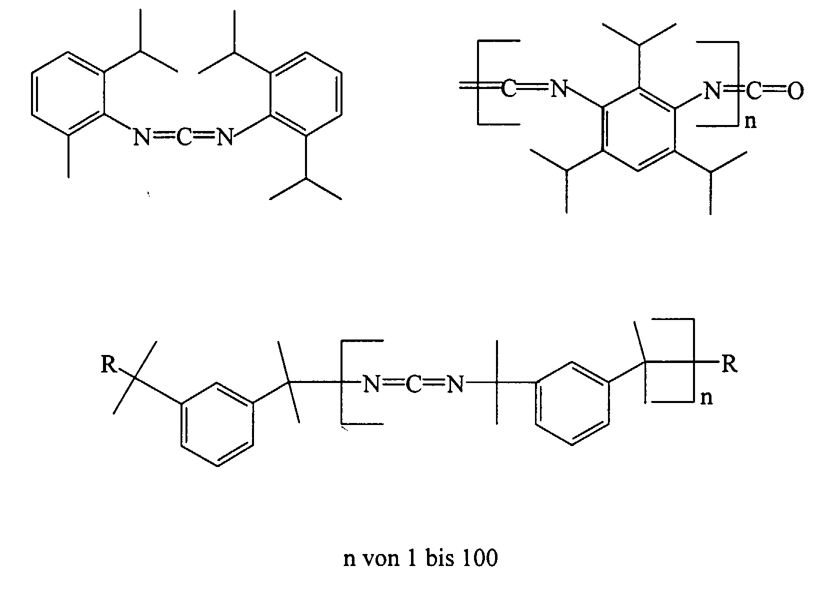 mit R=NHCOOR', R' = Methylpolyetherglycol, R' = Ethanol
R = NCO oder Umsetzungsprodukt

### Carbodiimidfreie Isocyanurate:

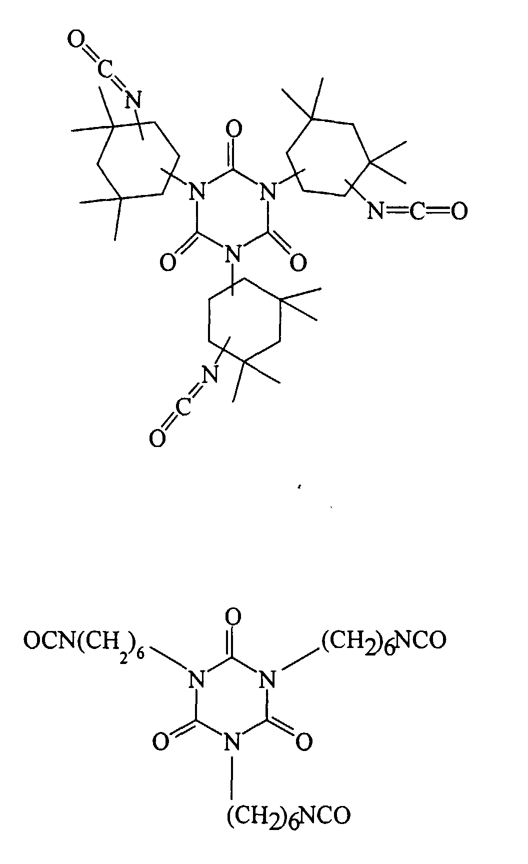

Die Erfindung wird nun anhand nicht limitierender Beispiele näher erläutert:

### Beispiele

Die nachstehend angegebenen Komponenten wurden in einer üblichen Mischvorrichtung bei Raumtemperatur gemischt.
- Komponente 1:: Resorcinol-bisdiphenylphosphat
- Komponente 2:: Elastostab® HO1
- Komponente 3:: Elastostab® HO2
- Komponente 4:: Vestanat® 1890/100
- Komponente 5:: Basonat® HI 100
- Komponente 6:: NCO-freies Umsetzungsprodukt von Elastostab® HO2 mit Ethanol

| Komp. | | | | | | | |
|---|---|---|---|---|---|---|---|
| 1 | 99 | 99 | 90 | 95 | 90 | 90 | 100 |
| 2 | 1 | 2 | | | | | |
| 3 | | | 10 | | | | |
| 4 | | | | 5 | | | |
| 5 | | | | | 10 | | |
| 6 | | | | | | 10 | |
| SZ(0) | 0,13 | 0,13 | n.g. | n.g. | n.g. | n.g. | 0,13 |
| SZ(7) | 0,13 | 0,13 | n.g. | n.g. | n.g. | n.g. | 0,34 |
| SZ(14) | 0,14 | 0,15 | n.g. | n.g. | n.g. | n.g. | 0,62 |
| SZ(21) | 0,19 | 0,18 | n.g. | n.g. | n.g. | n.g. | 0,81 |
| Cu-Korr. | mittel | schwach | schwach | keine | schwach | schwach | stark |
| n.g.: nicht gemessen SZ: Säurezaht | | | | | | | |

Als Maß für die Zersetzung wurde die Säurezahl nach Lagerung bei 80°C für 0, 7, 14 und 21 Tage bestimmt durch Lösen in Aceton, Zugabe einer definierten Menge 0,5M KOH und Titration. Die Einheit ist mg KOH.

Für die Untersuchung der Cu-Korrosion (Cu-Korr.) wurde ein Tropfen der Probe auf ein poliertes Cu-Blech gegeben und bei 160°C für 7 Tage gelagert. Danach wurde die Cu-Scheibe mit Aceton gewaschen und die Verfärbung im Bereich der Probe visuell beurteilt.

## Patentansprüche

1. Zusammensetzung, mindestens enthaltend
- eine Phosphorverbindung,
und
- mindestens eine Stabilisatorverbindung gemäß einer der allgemeinen Formeln I bis IV 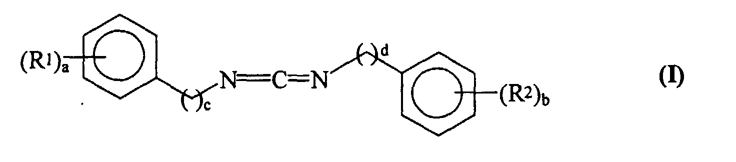 mit
R¹, R² unabhängig voneinander ein Wasserstoffatom, C₁- bis C₁₀-Alkylrest, C₆- bis C₁₂-Arylrest, C₇- bis C₁₃-Aralkylrest oder C₇- bis C₁₃-Alkylarylrest,
a, b unabhängig voneinander 1 bis 5,
c, d unabhängig voneinander 0 bis 10; 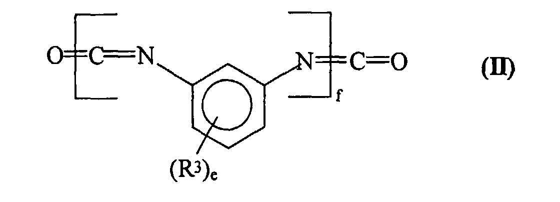 mit
R³ ein Wasserstoffatom, C₁- bis C₁₀-Alkylrest, C₆- bis C₁₂-Arylrest, C₇- bis C₁₃-Aralkylrest, C₇- bis C₁₃-Alkylarylrest,
e 1 bis 4,
f 1 bis 100; 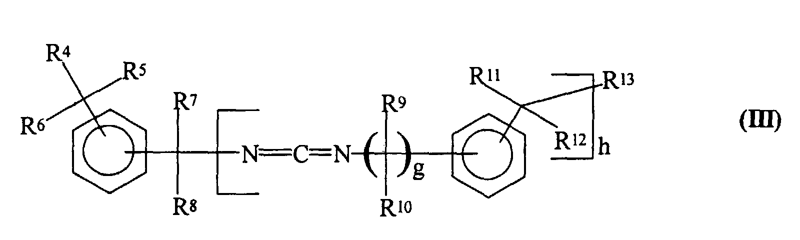 mit
R⁴, R¹³ unabhängig voneinander NCO oder NHCOOR', wobei R' ein Alkylpolyetherglycol oder C₁- bis C₂₀-Alkohol ist,
R⁵, R⁶, R⁷, R⁸, R⁹, R¹⁰, R¹¹, R¹², unabhängig voneinander ein Wasserstoffatom, C₁- bis C₁₀-Alkytrest, C₆- bis C₁₂-Arylrest, C₇- bis C₁₃-Aralkylrest oder C₇- bis C₁₃-Alkylarylrest,
g 0 bis 5
h 1 bis 100; 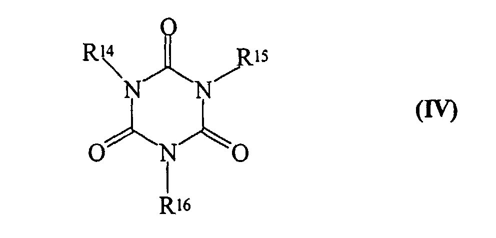 mit
R¹⁴, R¹⁵, R¹⁶ unabhängig voneinander ein Wasserstoffatom oder 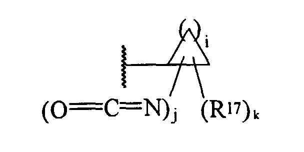 wobei R¹⁷ ein Wasserstoffatom, C₁- bis C₁₀-Alkylrest, C₆- bis C₁₂-Arylrest, C₇- bis C₁₃-Aralkylrest oder C₇- bis C₁₃ Alkylarylrest,
i 2 bis 8,
j 1 bis i-k,
k 0 bis i-j, wobei j + k ≤ i,
" 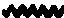 " kennzeichnet die C-N-Bindung zum Stickstoffheterocyclus gemäß der allgemeinen Formel IV,
oder
(CH₂)₁-N=C=O, wobei 11 bis 20 ist.

2. Zusammensetzung nach Anspruch 1, wobei die Zusammensetzung 0,01 bis 20 Gew.-%, bezogen auf die Zusammensetzung, mindestens einer Stabilisatorverbindung enthält.

3. Zusammensetzung nach einem der Ansprüche 1 oder 2, wobei die Zusammensetzung 99,99 bis 80 Gew.-%, bezogen auf die Zusammensetzung, mindestens eine Phosphorverbindung enthält.

4. Zusammensetzung nach einem der Ansprüche 1 bis 3, wobei eine der Phosphorverbindungen eine Phosphorverbindung mit 8 bis 120 Kohlenstoffatomen ist.

5. Zusammensetzung nach Anspruch 4, wobei die Phosphorverbindung die allgemeine Formel V hat 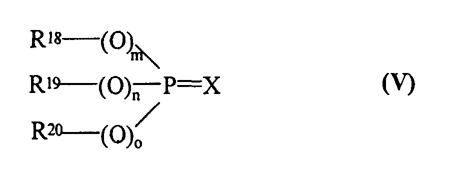 mit
R¹⁸, R¹⁹, R²⁰ unabhängig voneinander ein Alkylrest, Alkylarylrest, Arylalkylrest oder Cycloalkylrest mit 7 bis 40 Kohlenstoffatomen, oder Cycloalkylrest mit 4 bis 40,
X ein Schwefel- oder Sauerstoffatom,
m, n, o unabhängig voneinander 0 oder 1.

6. Zusammensetzung nach einem der Ansprüche 1 bis 5, wobei die Phosphorverbindung ausgewählt ist aus der Gruppe Triphenylphosphinoxid, Triphenylphosphinsulfid, Triphenylphosphat, Resorcinol-bis-(diphenylphosphat) oder Triphenylphosphin oder mindestens zwei davon.

7. Zusammensetzung nach einem der Ansprüche 1 bis 6, wobei die Säurezahl der Zusammensetzung über einen Zeitraum von 1 bis 100 Tagen ab dem Zeitpunkt des In-Kontakt-Bringens der Phosphorverbindung mit der Stabilisatorverbindung um maximal 20 % von der Säurezaht im Zeitpunkt des In-Kontakt-Bringens abweicht.

8. Verwendung der in einem der Ansprüche 1 bis 7 definierten Zusammensetzung oder der in Anspruch 1 definierten Stabilisatorverbindung zur Erhöhung der Lagerstabilität oder Verringerung der Metallkorrosionsneigung von Phosphorverbindungen.
